# EUROPÄISCHE PATENTSCHRIFT

(11) **EP 1 928 232 B1**
(45) Veröffentlichungstag und Bekanntmachung des Hinweises auf die Patenterteilung: **13.07.2016**
(21) Anmeldenummer: 06791822.7
(22) Anmeldetag: 02.09.2006
(51) Int. Cl.: A01N 25/14, A01N 25/12, A01N 47/38, A01N 47/36, A01P 13/02

(54) **FESTFORMULIERUNG**
SOLID FORMULATION
COMPOSITION SOLIDE

(30) Priorität: 16.09.2005 EP 05020219
(43) Veröffentlichungstag der Anmeldung: 11.06.2008
(73) Patentinhaber: Bayer Intellectual Property GmbH, 40789 Monheim am Rhein (DE)
(72) Erfinder: SCHNABEL, Gerhard, 63820 Elsenfeld (DE); KRAUSE, Hans-Peter, 65719 Hofheim (DE)
(74) Vertreter: BIP Patents
(86) Internationale Anmeldenummer: PCT/EP2006/008617
(87) Internationale Veröffentlichungsnummer: WO 2007/033759

(56) Entgegenhaltungen:
- EP-A- 0 367 887
- EP-A- 0 413 267
- EP-A- 0 764 404
- EP-A- 1 277 405
- EP-A1- 0 507 171
- WO-A-02/17718
- WO-A-93/13658
- WO-A-98/33383
- WO-A-98/34482
- WO-A-98/42192
- WO-A1-2007/028529
- US-A- 5 650 375
- US-A1- 2005 113 254
- WPI WORLD PATENT INFORMATION DERWENT, DERWENT, GB, Bd. 21, Nr. 87 PA - KUMIAI CHEM IND CO LTD PN - JP62084004 A, 1987, XP002067319
- HAY J V: "CHEMISTRY OF SULFONYLUREA HERBICIDES" PESTICIDE SCIENCE, ELSEVIER APPLIED SCIENCE PUBLISHER. BARKING, GB, Bd. 29, Nr. 3, Januar 1990 (1990-01), Seiten 247-261, XP000202810 ISSN: 0031-613X

## Beschreibung

Die vorliegende Erfindung betrifft das Gebiet der Pflanzenschutzmittelformulierungen. Insbesondere betrifft die Erfindung feste Formulierungen in Form von Granulaten, welche Propoxycarbazone und/oder dessen Salze enthalten.

Wirkstoffe für den Pflanzenschutz werden im allgemeinen nicht in ihrer reinen Form eingesetzt. In Abhängigkeit von dem Anwendungsgebiet und der Anwendungsart, sowie von physikalischen, chemischen und biologischen Parametern wird der Wirkstoff in Mischung mit üblichen Hilfs- und Zusatzstoffen als Wirkstoffformulierung eingesetzt. Auch die Kombinationen mit weiteren Wirkstoffen zur Erweiterung des Wirkungsspektrum und/oder zum Schutz der Kulturpflanzen (z.B. durch Safener, Antidote) sind bekannt.

Formulierungen von Wirkstoffen für den Pflanzenschutz sollten im allgemeinen eine hohe chemische und physikalische Stabilität, eine gute Applizierbarkeit und Anwenderfreundlichkeit und eine breite biologische Wirkung mit hoher Selektivität aufweisen.

Herbizide Wirkstoffe aus der Gruppe der Sulfonamide, wie Sulfonylharnstoffe, weisen im allgemeinen ein hohes Maß an chemischer Reaktivität auf und neigen zum chemischen Abbau, z.B. durch Hydrolyse.

EP 0507171 beschreibt ausgewählte Sulfonylaminocarbonyltriazolinone, umfassend Propoxycarbazone und deren Salze, mehrere Verfahren und neue Zwischenprodukte zu ihrer Herstellung sowie ihre Verwendung als Herbizide.

Eine Möglichkeit chemisch labile Wirkstoffe zu formulieren, ist die Herstellung fester Formulierungen. So sind Formulierungen von Wirkstoffen aus der Gruppe der Sulfonylharnstoffe, in Form von Pulvern, Granulaten und Tabletten bekannt (z. B. in EP 764404, WO 9834482, WO 9313658).

EP 0367 887 A beschreibt ein herbizides Wirkstoffkonzentrat in Form von gepressten Formkörpern, die als aktive Komponente einen herbizid wirksamen Suflonylharnstoff enthalten, und die in Wasser unter Bildung einer spritzfähigen Dispersion zerfallen.

WO 98/33383 beschreibt feste Mischungen, die einen Sulfonylharnstoff und ein Adjuvant aus der Gruppe der Alkylpolyglykoside enthalten, wodurch - im Vergleich zur Verwendung anderer Netzmittel, wie ethoxylierter Fettamine oder Alkoholethoxylaten - eine bessere Stabilisierung des Wirkstoffs erzielt wird.

In WO 98/42192 wird die Verwendung von Alkylethern von Copolymeren von C₂-C₄ Alkylenoxiden als Netzmittel in Sulfonylharnstoff-haltigen Feststoffformulierungen beschrieben, wodurch eine verbesserte Stabilisierung des Wirkstoffs im Vergleich der Verwendung anderer, strukturell verwandter Netzmittel (wie Fettalkoholethoxylate und Ethylenoxid/Propylenoxid-Blockcopolymere) auftritt.

EP 1 277 405 A1 beschreibt die Verwendung herbizider Feststoffformulierungen, die (a) den Sulfonylharnstoff Flazasulfuron sowie (b) einem oder mehrerer Wirkstoffe aus der Gruppe bestehend aus N-(phosphonomethyl)glycine, 4-[hydroxy(methyl) phosphinoyl]homoalanine und 4-[hydroxy(methyl)phosphinoyl]-homoalanylalanylalanine enthalten und weiter ein oder mehrere Netzmittel und Stabilisierungsmittel aufweisen.

In der frühreren jedoch zum Zeitpunkt der Einreichung der vorliegenden Anmeldung noch nicht veröffentlichten Patentanmeldung WO 2007/028529 werden lagerstabile feste, wasserdispergierbare Formulierungen enthaltend ein oder mehrere herbizide Wirkstoffe aus der Gruppe der Sulfonamide, insbesondere der Phenylsulfonamide, wie Phenylsulfonylaminocarbonyltriazolinonen und deren Salze (u.a. Propoxycarbazone-natrium), ein oder mehrere Trägermaterialien und ein oder mehrere Netzmittel aus der Gruppe der Naphthalinsulfonsäuren und der Gruppe der Sulfobernsteinsäure-Derivate sowie den Salzen dieser Gruppen beschrieben, wobei als Netzmittel Naphthalinsulfonsäuren bzw Sulfobernsteinsäure-Derivate sowie die Salze dieser Gruppen verwendet werden.

Allerdings kann sich die Herstellung einer Spritzbrühe aus sulfonamid-haltigen festen Formulierungen, insbesondere aus Granulaten, als schwierig erweisen, z.B. aufgrund Verstopfung von Sieben und Einspülschleusen, insbesondere wenn dabei Flüssigdünger verwendet werden. Dadurch können gewünschte Tankmischungen entweder gar nicht herstellbar sein oder es sind bestimmte Anmischverfahren strikt zu befolgen, um die Tankmischungen überhaupt herstellen zu können und Applikationsprobleme zu vermeiden.

Ein weiteres potentielles Problem von festen Formulierungen besteht darin, dass sie zu Staubentwicklung neigen. Dieses Problem kann verschärft werden, wenn sulfonamid-haltige feste Formulierungen eine geringe Teilchengröße aufweisen und eine hohe Beladung an Sulfonamid haben, insbesondere durch elektrostatische Aufladung.

Die Aufgabe der vorliegenden Erfindung bestand darin, sulfonamid-haltige feste Formulierungen zur Verfügung zu stellen, welche die genannten Probleme vermeiden.

Überraschenderweise wurde nun gefunden, dass diese Aufgabe gelöst wird durch die sulfonamid-haltigen Festformulierungen der vorliegenden Erfindung.

Die vorliegende Erfindung betrifft somit agrochemische Festformulierungen bestehend aus wasserlöslichen Granulaten, enthaltend
a) Propoxycarbazone und/oder dessen Salze
b) eines oder mehrere Tenside, und
c) mindestens 2 Gew.-% Wasser, wobei die Granulate eine Korngröße auf von d₁₀ ≤ 250 µm, d₅₀ ≤ 350 µm und d₉₀ ≤ 450 µm aufweisen aufweisen

Darüber hinaus kann die erfindungsgemäße Festformulierung als weitere Komponenten gegebenenfalls noch enthalten:
d) einen oder mehrere von a) verschiedene agrochemische Wirkstoffe, und
e) übliche von b) verschiedene Hilfs- und Zusatzstoffe.

Unter einer Festformulierung bzw. festen Formulierung im Sinne der vorliegenden Erfindung werden Granulate, verstanden (vgl. Spray Drying Handbook; 3rd Ed.; K. Masters (1979); George Yodwin Limited, London; John Wiley & Sons, New York), insbesondere Granulate für die Streu- und Bodenapplikation, Granulate (GR) in Form von Mikro-, Sprüh-, Aufzugs- und Adsorptionsgranulaten, wasserdispergierbare Granulate (WG), wasserlösliche Granulate (SG). Diese einzelnen Formulierungstypen sind im Prinzip bekannt und werden einschließlich ihrer Herstellung beispielsweise beschrieben in: Winnacker-Küchler, "Chemische Technologie", Band 7, C. Hauser Verlag München, 4. Aufl. 1986, Wade van Valkenburg, "Pesticide Formulations", Marcel Dekker, N.Y., 1973; K. Martens, "Spray Drying" Handbook, 3rd Ed. 1979, G. Goodwin Ltd. London. Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen, von den herbizid wirksamen Sulfonamiden a) verschiedenen agrochemischen Wirkstoffen wie Insektiziden, Akariziden, Herbiziden, Fungiziden, Safenern, Düngemitteln wie Ammoniumsulfat, Ammoniumhydrogensulfat, Ammoniumnitrat, Harnstoff oder Mischungen davon, und/oder Wachstumsregulatoren herstellen, z.B. in Form einer Fertigformulierung oder als Tankmix.

Granulate können entweder durch Verdüsen des Wirkstoffes a), Tenside b) und / oder sonstige Hilfsmittel / weiteren agrochemischen Wirkstoffen auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe a), Tenside b), Wasser c) und / oder sonstige Hilfsstoffe in der für die Herstellung von Düngemittelgranulaten üblichen Weise - gewünschtenfalls in Mischung mit Düngemitteln - granuliert werden.

Wasserdispergierbare Granulate werden in der Regel aus den Komponenten a), b), c) und gegebenenfalls d) und e) nach den üblichen Verfahren wie Sprühtrocknung, Wirbelbett-Granulierung, Teller-Granulierung, Mischung mit Hochgeschwindigkeitsmischern oder Extrusion hergestellt.

Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perryls Chemical Engineerls Handbook", 5th Ed., McGraw-Hill, New York 1973, S. 8-57. Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die erfindungsgemäßen Festformulierungen enthalten vorzugsweise 25 bis 97,9 Gew.-%, bevorzugt 50 bis 95 Gew.-%, besonders bevorzugt 60 bis 95 Gew.-%, Propoxycarbazone und/oder dessen Salze.

Bei Granulaten beträgt der Gehalt an Propoxycarbazone und/oder dessen Salze vorzugsweise 50 bis 95 Gew.-%, vorzugsweise 60 bis 90 Gew.-%.

Daneben können die erfindungsgemäßen Festformulierungen gegebenenfalls übliche Hilfs- und Zusatzstoffe enthalten wie Haft-, Netz-, Dispergier-, Emulgier-, Penetrations-, Konservierungs-, Frostschutz- und Lösungsmittel, Füll-, Träger- und Farbstoffe, Entschäumer, Adjuvants wie Mineral- oder Pflanzenöle und deren Derivate, Verdunstungshemmer und den pH-Wert und die Viskosität beeinflussende Mittel.

Bevorzugte Festformulierungen sind Granulate, die nach bekannten Verfahren hergestellt werden, wie durch Sprühtrocknung, z.B. im Wirbelbett, Extrusion, Shugi-Granulierung oder Tellergranulierung. Besonders bevorzugt sind wasserlösliche Granulate (SG), insbesondere solche die durch Sprühtrocknung hergestellt sind.

Die vorstehend aufgeführten Wirkstoffe sind z.B. bekannt aus "The Pesticide Manual", 12. Auflage (2000), The British Crop Protection Council oder den nach den einzelnen Wirkstoffen aufgeführten Literaturstellen.

Unter den in den erfindungsgemäßen Festformulierungen als Komponente enthaltenen Propoxycarbazone und/oder dessen Salze werden im Sinne der vorliegenden Erfindung sind stets sämtliche Anwendungsformen wie Säuren, Ester, Salze und Isomere wie Stereoisomere und optische Isomere verstanden. So sind neben den neutralen Verbindungen stets auch deren Salze mit anorganischen und/oder organischen Gegenionen zu verstehen. So können Sulfonamide z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃. Bevorzugte Ester sind die Alkylester, insbesondere die C₁-C₁₀-Alkylester wie Methylester.

Soweit in dieser Beschreibung der Begriff Acylrest verwendet wird, bedeutet dieser den Rest einer organischen Säure, der formal durch Abspaltung einer OH-Gruppe aus der organischen Säure entsteht, z.B. der Rest einer Carbonsäure und Reste davon abgeleiteter Säuren wie der Thiocarbonsäure, gegebenenfalls N-substituierten Iminocarbonsäuren oder die Reste von Kohlensäuremonoestern, gegebenenfalls N-substituierter Carbaminsäuren, Sulfonsäuren, Sulfinsäuren, Phosphonsäuren, Phosphinsäuren.

Ein Acylrest ist bevorzugt Formyl oder Acyl aus der Gruppe CO-R^{z}, CS-R^{z}, CO-OR^{z}, CS-OR^{z}, CS-SR^{z}, SOR^{z} oder SO₂R^{z}, wobei R^{z} jeweils einen C₁-C₁₀-Kohlenwasserstoffrest wie C₁-C₁₀-Alkyl oder C₆-C₁₀-Aryl bedeutet, der unsubstituiert oder substituiert ist, z.B. durch einen oder mehrere Substituenten aus der Gruppe Halogen wie F, Cl, Br, I, Alkoxy, Haloalkoxy, Hydroxy, Amino, Nitro, Cyano oder Alkylthio, oder R^{z} bedeutet Aminocarbonyl oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl.

Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert sein kann, oder Alkyloxycarbonyl, wie (C₁-C₄) Alkyloxycarbonyl, Phenyloxycarbonyl, Benzyloxycarbonyl, Alkylsulfonyl, wie (C₁-C₄) Alkylsulfonyl, Alkylsulfinyl, wie C₁-C₄(Alkylsulfinyl), N-Alkyl-1-iminoalkyl, wie N-(C₁-C₄)-1-imino-(C₁-C₄)alkyl und andere Reste von organischen Säuren.

Ein Kohlenwasserstoffrest bedeutet ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl.

Aryl bedeutet ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl.

Ein heterocyclischer Rest oder Ring (Heterocyclyl) kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Triazolyl, Dioxolanyl, Morpholinyl, Tetrahydrofuryl. Bevorzugt sind Pyrimidinyl und Triazinyl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.

Substituierte Reste, wie substituierte Kohlenwasserstoffreste, z.B. substituiertes Alkyl, Alkenyl, Alkinyl, Aryl, Phenyl und Benzyl, oder substituiertes Heterocyclyl oder Heteroaryl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.

Gegebenenfalls substituiertes Phenyl ist vorzugsweise Phenyl, das unsubstituiert oder ein- oder mehrfach, vorzugsweise bis zu dreifach durch gleiche oder verschiedene Reste, vorzugsweise aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, z.B. o-, m- und p-Tolyl, Dimethylphenyl, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Cycloalkyl bedeutet ein carbocyclisches, gesättigtes Ringsystem vorzugsweise mit 3-6 C-Atomen, z.B. Cyclopropyl, Cyclobutyl, Cyclopentyl oder Cyclohexyl.

Die kohlenstoffhaltigen Reste wie Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl. Halogen bedeutet beispielsweise Fluor, Chlor, Brom oder Iod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Die herbiziden Wirkstoffe Propoxycarbazone und/oder dessen Salze sind in den erfindungsgemäßen Festformulierungen vorzugsweise in Mengen von 25 bis 97,9 Gew.-%, bevorzugt von 50 bis 95 Gew.-%, besonders bevorzugt von 60 bis 95 Gew.-%, ganz besonders bevorzugt von 60 bis 80 Gew.-% enthalten, dabei bezieht sich die Angabe "Gew.-%" hier und in der gesamten Beschreibung, wenn nicht anders definiert, auf das relative Gewicht der jeweiligen Komponente bezogen auf das Gesamtgewicht der Formulierung.

Die als Tenside b) geeigneten Verbindungen sind literaturbekannt, z.B. aus McCutcheon's, Emulsifiers&Detergents 1994, Vol. 1: North American Edition und Vol. 2, International Edition; McCutcheon Division, Glen Rock NJ, USA sowie aus "Surfactants in Consumer Products", J. Falbe, Springer-Verlag Berlin, 1987. Als Tenside b) eignen sich besonders Netzmittel, Emulgatoren und Dispergatoren.

Ein Netzmittel ist vorzugsweise ausgewählt aus der Gruppe der Substanzklassen der Alkylsulfate, Alkylsulfonate, Sulfate und Phosphate von gegebenenfalls Alkylaryl-Gruppen enthaltenden Alkohole, Alykylarylsulfonate, fettacylierte N-Alkyltauride, alpha-Olefinsulfonsäure, alkylierte aromatische Sulfonsäuren, Mono- und Dialkylsulfobernsteinsäure, der Salze aller dieser vorgenannten Stoffe, sowie der Alkylpolyglykoside, der Ether und Ester zwischen gegebenenfalls alkylierten Polyalkylenoxiden und aliphatischen oder aromatischen Alkohole bzw. Carbonsäuren, außerdem die Reaktionsprodukte aliphatischer oder aromatischer mono- oder Polyamine mit Alkylenoxiden.

Bevorzugt werden die Mono- und Disulfonsäuren des Naphthalins mit ein bis zwei geradkettigen oder verzeigten Alkylgruppen (z.B.wie di-tert.-Butyl-naphthylsulfonsäure-Natrium), besonders bevorzugt sind Natrium-Salze von Mono- oder Dialkyl-Naphthalinsulfonsäuren, z.B. der Firmen BASF (Nekal® BX), Nufarm (Galoryl® MT 804), Akzo Nobel (Morwet® EFW).

Als Emulgatoren und Dispergatoren kommen z.B. nichtionische Emulgatoren und Dispergatoren in Frage, z.B.:
1) polyalkoxylierte, vorzugsweise polyethoxylierte, gesättigte und ungesättigte aliphatische Alkohole,
   a) mit 8 bis 24 C-Atomen im Alkylrest, der sich von den entsprechenden Fettsäuren oder aus petrochemischen Produkten ableitet, und
   b) mit 1 bis 100, vorzugsweise 2 bis 50, Ethylenoxideinheiten (EO), wobei die freie Hydroxy-Gruppe gegebenenfalls alkoxyliert ist,
   c) die z. B. kommerziell als Genapol^{®}X- und Genapol^{®}O-Reihe (Clariant), Crovol^{®}M-Reihe (Croda) oder Lutensol^{®}Reihe (BASF) erhältlich sind,
2) polyalkoxylierte, vorzugsweise polyethoxylierte Arylalkylphenole, wie z. B. 2,4,6-Tris-(1-phenylethyl)-phenol (Tristyrylphenol) mit einem mittleren Ethoxylierungsgrad zwischen 10 und 80, bevorzugt 16 bis 40, wie z. B. Soprophor^{®}BSU (Rhodia) oder HOE S 3474 (Clariant),
3) polyalkoxylierte, vorzugsweise polyethoxylierte Alkylphenole mit einem oder mehreren Alkylresten, wie z. B. Nonylphenol oder Tri-sec-butylphenol, und einem Ethoxylierungsgrad zwischen 2 und 40, bevorzugt 4 bis 15, wie z. B. Arkopal^{®}N-Reihe oder Sapogenat^{®}T-Reihe (Clariant),
4) polyalkoxylierte, vorzugsweise polyethoxylierte Hydroxyfettsäuren oder Hydroxyfettsäuren enthaltene Glyceride, wie z. B. Ricinin bzw. Rizinusöl, mit einem Ethoxylierungsgrad zwischen 10 und 80, bevorzugt 25 bis 40, wie z. B. Emulsogen^{®}EL-Reihe (Clariant) oder Agnique^{®}CSO-Reihe (Cognis),
5) polyalkoxylierte, vorzugsweise polyethoxylierte Sorbitanester, wie z. B. Atplus^{®}309 F (Uniqema) oder Alkamuls^{®}-Reihe (Rhodia)
6) Di- und Tri-block-copolymere, z.B. aus Alkylenoxiden, z.B. aus Ethylen- und Propylenoxid mit mittleren Molmassen zwischen 200 und 10000, vorzugsweise 1000 bis 4000 g/mol, wobei der Massenanteil des polyethoxylierte Blocks zwischen 10 und 80% variiert, wie z. B. Genapol^{®}PF-Reihe (Clariant), Pluronic^{®}-Reihe (BASF), oder Synperonic^{®}PE-Reihe (Uniqema),

Bevorzugte nichtionische Emulgatoren und Dispergatoren sind z.B. polyethoxylierte Alkohole, polyethoxylierte Triglyceride, die Hydroxyfettsäuren enthalten und Polyethylenoxid-Polypropylenoxid-Block-Copolymere.

Es kommen auch ionische Emulgatoren und Dispergatoren in Frage, z.B.:
1) polyalkoxylierte, vorzugsweise polyethoxylierte Emulgatoren/Dispergatoren (vgl. Komponente e), die ionisch modifiziert sind, z. B. durch Umsetzung der endständigen freien Hydroxylfunktion des Polyethylenoxidblocks zu einem Sulfat- oder Phosphatester (z. B. als Alkali- und Erdalkalimetallsalze), wie z. B. Genapol^{®}LRO oder Dispergiermittel 3618 (Clariant), Emulphor^{®} (BASF) oder Crafol^{®}AP (Cognis),
2) Alkali- und Erdalkalimetallsalze von Alkylarylsulfonsäuren mit linearer oder verzweigter Alkylkette, wie Phenylsulfonat CA oder Phenylsulfonat CAL (Clariant), Atlox^{®} 3377BM (ICI), Empiphos^{®}TM-Reihe (Huntsman)
3) Polyelektrolyte, wie Ligninsulfonate und Kraftligninsulfonate, Kondensationsprodukte aus Naphthalinsulfonat und Formaldehyd, Polystyrolsulfonat oder sulfonierte ungesättigte oder aromatische Polymere (Polystyrole, Polybutadiene oder Polyterpene), wie Tamol^{®}-Reihe (BASF), Morwet^{®}D425 (Witco), Kraftsperse^{®}-Reihe (Westvaco), Borresperse^{®}-Reihe (Borregard).

Bevorzugte ionische Emulgatoren/Dispergatoren sind Polyacrylate und Ligninsulfonate, z.B. der Firmen Mead Westvaco (Reax® 88B) oder Borregard (Borresperse® NA).

Der Gehalt der in den erfindungemäßen Festformulierungen enthaltenen Tenside b) beträgt bevorzugt 0,1 bis 30 Gew.-%, besonders bevorzugt 5 bis 25 Gew.-%.

Den Gehalt an Wasser c) der Festformulierungen kann man z.B. einstellen, indem man Wasser in der benötigten Menge zur Rezeptur hinzufügt, z.B. durch Aufsprühen von Wasser auf ein Granulat, Pulver oder auf Stäube, oder indem man Wasser, das im Überschuss zugesetzt wurde, kontrolliert entfernt, z.B. durch Sprühtrocknung, so dass der Wert von 2 Gew.-% an Wasser nicht unterschritten wird.

Eine bevorzugte Ausführungsvariante besteht darin, dass der Gehalt an Wasser in der Festformulierung mindestens 2,5 Gew.-% beträgt. Besonders bevorzugt sind Festformulierungen, in denen der Wassergehalt von 2 bis 10 Gew.-% beträgt, insbesondere von 2,5 bis 10 Gew.-% und ganz besonders bevorzugt von 2,5 bis 5 Gew.-%.

Als von Komponente a) verschiedene optionale agrochemische Wirkstoffe d) kommen z.B. in Frage Insektizide, Akarizide, Herbizide, Fungizide, Safener, Düngemittel wie Ammoniumsulfat, Ammoniumhydrogensulfat, Harnstoff oder Mischungen davon, und/oder Wachstumsregulatoren.

Geeignete von Komponente a) verschiedene agrochemische Wirkstoffe d), die in den erfindungsgemäßen Festformulierungen enthalten sind, sind z.B. Safener die geeignet sind, Schäden an der Kulturpflanze zu reduzieren oder zu vermeiden. Geeignete Safener sind z.B. aus WO-A-96/14747 und der dort zitierten Literatur bekannt.

Folgende Gruppen von Verbindungen sind beispielsweise als Safener geeignet:
1) Verbindungen vom Typ der Dichlorphenylpyrazolin-3-carbonsäure (S1), vorzugsweise Verbindungen wie 1-(2,4-Dichlorphenyl)-5-(ethoxycarbonyl)-5-methyl-2-pyrazolin-3-carbonsäureethylester (S1-1, Mefenpyr-diethyl, PM S. 781 - 782), und verwandte Verbindungen, wie sie in der WO 91/07874 beschrieben sind,
2) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1 -dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind.
3) Verbindungen vom Typ der Triazolcarbonsäuren (S1), vorzugsweise Verbindungen wie Fenchlorazol, d.h. 1-(2,4-Dichlorphenyl)-5-trichlormethyl-(1 H)-1,2,4-triazol-3-carbonsäureethylester (S1-6, Fenchlorazol-ethyl, PM S. 385-386), und verwandte Verbindungen (siehe EP-A-174 562 und EP-A-346 620);
4) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäureethylester (S1-9, Isoxadifen-ethyl) oder -n-propylester (S1-10) oder der 5-(4-Fluorphenyl)-5-phenyl-2-isoxazolin-3-carbonsäureethylester (S1-11), wie sie in der Patentanmeldung (WO-A-95/07897) beschrieben sind.
5) Verbindungen vom Typ der 8-Chinolinoxyessigsäure (S2), vorzugsweise (5-Chlor-8-chinolinoxy)-essigsäure-(1 -methyl-hex-1-yl)-ester (S2-1 Cloquintocet-mexyl, PM S. 263 - 264), (5-Chlor-8-chinolinoxy)-essigsäure-(1,3-dimethyl-but-1-yl)-ester (S2-2), (5-Chlor-8-chinolinoxy)-essigsäure-4-allyl-oxy-butylester (S2-3), (5-Chlor-8-chinolinoxy)-essigsäure-1-allyloxy-prop-2-ylester (S2-4), (5-Chlor-8-chinolinoxy)-essigsäureethylester (S2-5), (5-Chlor-8-chinolinoxy)-essigsäuremethylester (S2-6), (5-Chlor-8-chinolinoxy)-essigsäureallylester (S2-7), (5-Chlor-8-chinolinoxy)-essigsäure-2-(2-propyliden-iminoxy)-1-ethylester (S2-8), (5-Chlor-8-chinolinoxy)-essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind.
6) Verbindungen vom Typ der (5-Chlor-8-chinolinoxy)-malonsäure, vorzugsweise Verbindungen wie (5-Chlor-8-chinolinoxy)-malonsäure-diethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.
7) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).
8) Wirkstoffe vom Typ der Pyrimidine, wie "Fenclorim" (PM, S. 512-511) (= 4,6-Dichlor-2-phenylpyrimidin),
9) Wirkstoffe vom Typ der Dichloracetamide, die häufig als Vorauflaufsafener (bodenwirksame Safener) angewendet werden, wie z.B.
"Dichlormid" (PM, S. 363-364) (= N,N-Diallyl-2,2-dichloracetamid), "R-29148" (= 3-Dichloracetyl-2,2,5-trimethyl-1,3-oxazolidon von der Firma Stauffer),
"Benoxacor" (PM, s. 102-103) (= 4-Dichloracetyl-3,4-dihydro-3-methyl-2H-1,4-benzoxazin).
"PPG-1292" (= N-Allyl-N[(1,3-dioxolan-2-yl)-methyl]dichloracetamid von der Firma PPG Industries),
"DK-24" (= N-Allyl-N-[(allylaminocarbonyl)-methyl]-dichloracetamid von der Firma Sagro-Chem),
"AD-67" oder "MON 4660" (= 3-Dichloracetyl-1-oxa-3-aza-spiro[4,5]decan von der Firma Nitrokemia bzw. Monsanto),
"Dicyclonon" oder "BAS145138" oder "LAB145138" (= (= 3-Dichloracetyl-2,5,5-trimethyl-1,3-diazabiclyco[4.3.0]nonan von der Firma BASF) und "Furilazol" oder "MON 13900" (siehe PM, 637-638) (= (RS)-3-Dichloracetyl-5-(2-furyl)-2,2-dimethyloxazolidon)
10) Wirkstoffe vom Typ der Dichloracetonderivate, wie z.B.
"MG 191" (CAS-Reg. Nr. 96420-72-3) (= 2-Dichlormethyl-2-methyl-1,3-dioxolan von der Firma Nitrokemia),
11) Wirkstoffe vom Typ der Oxyimino-Verbindungen, die als Saatbeizmittel bekannt sind, wie z.B.
"Oxabetrinil" (PM, S. 902-903) (= (Z)-1,3-Dioxolan-2-ylmethoxyimino(phenyl)acetonitril), das als Saatbeiz-Safener gegen Schäden von Metolachlor bekannt ist,
"Fluxofenim" (PM, S. 613-614) (= 1-(4-Chlorphenyl)-2,2,2-trifluor-1-ethanon-0-(1,3-dioxolan-2-ylmethyl)-oxim, das als Saatbeiz-Safener gegen Schäden von Metolachlor bekannt ist, und
"Cyometrinil" oder "CGA-43089" (PM, S. 1304) (= (Z)-Cyanomethoxyimino (phenyl)acetonitril), das als Saatbeiz-Safener gegen Schäden von Metolachlor bekannt ist,
12) Wirkstoffe vom Typ der Thiazolcarbonsäureester, die als Saatbeizmittel bekannt sind, wie z.B.
"Flurazol" (PM, S. 590-591) (= 2-Chlor-4-trifluormethyl-1,3-thiazol-5-carbonsäurebenzylester), das als Saatbeiz-Safener gegen Schäden von Alachlor und Metolachlor bekannt ist,
13) Wirkstoffe vom Typ der Napthalindicarbonsäurederivate, die als Saatbeizmittel bekannt sind, wie z.B.
"Naphthalic anhydrid" (PM, S. 1342) (= 1,8-Naphthalindicarbonsäureanhydrid), das als Saatbeiz-Safener für Mais gegen Schäden von Thiocarbamatherbiziden bekannt ist,
14) Wirkstoffe vom Typ Chromanessigsäurederivate, wie z.B.
"CL 304415" (CAS-Reg. Nr. 31541-57-8) (= 2-84-Carboxy-chroman-4-yl)-essigsäure von der Firma American Cyanamid),
15) Wirkstoffe, die neben einer herbiziden Wirkung gegen Schadpflanzen auch Safenerwirkung an Kulturpflanzen aufweisen, wie z.B.
"Dimepiperate" oder "MY-93" (PM, S. 404-405) (= Piperidin-1-thiocarbonsäure-S-1-methyl-1-phenylethylester), "Daimuron" oder "SK 23" (PM, S. 330) (= 1-(1-Methyl-1-phenylethyl)-3-p-tolyl-harnstoff),
"Cumyluron" = "JC-940" (= 3-(2-Chlorphenylmethyl)-1-(1-methyl-1-phenyl-ethyl)-harnstoff, siehe JP-A-60087254),
"Methoxyphenon" oder "NK 049" (= 3,3'-Dimethyl-4-methoxy-benzophenon),
"CSB" (= 1-Brom-4-(chlormethylsulfonyl)-benzol) (CAS-Reg. Nr. 54091-06-4 von Kumiai), Verbindungen von Typ der Acylsulfamoylbenzoesäureamide, z.B. der nachfolgenden Formel (VIII), die z.B. bekannt sind aus WO 99/16744.

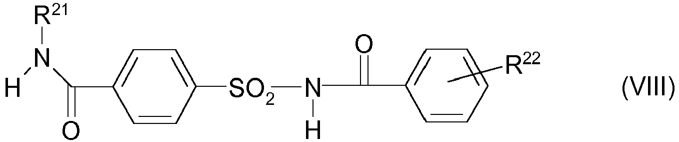

| Verbindung Nr. | R²¹ | R²² |
|---|---|---|
| S3-1 | Cyclo-Propyl | 2-OCH₃ |
| S3-2 | Cyclo-Propyl | 2-OCH₃, 5-Cl |
| S3-3 | Ethyl | 2-OCH₃ |
| S3-4 | iso-Propyl | 2-OCH₃, 5-Cl |
| S3-5 | iso-Propyl | 2-OCH₃ |

Bevorzugte Safener sind Mefenpyr, Fenchlorazol, Isoxadifen, Cloquintocet und deren C₁-C₁₀-Alkylester, insbesondere Mefenpyr-diethyl (S1-1), Fenchlorazol-ethyl (S1-6), Isoxadifen-ethyl (S1-9), Cloquintocet-mexyl (S2-1), und (S3-1).

Geeignete von Komponente a) verschiedene agrochemische Wirkstoffe, die in den erfindungsgemäßen Festformulierungen als Komponente d) optional enthalten sein können, sind vorzugsweise herbizide Wirkstoffe, beispielsweise:
A) Herbizide vom Typ der Phenoxyphenoxy- und Heteroaryloxyphenoxycarbonsäure-Derivate, wie
A1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl), 2-(4-(4-Brom-2-chlorphenoxy)phenoxy)propionsäuremethylester (DE-A 26 01 548), 2-(4-(4-Brom-2-fluorphenoxy)phenoxy)propionsäuremethylester (US-A 4,808,750), 2-(4-(2-Chlor-4-trifluormethylphenoxy)phenoxy)propionsäuremethylester (DE-A 24 33 067),
   2-(4-(2-Fluor-4-trifluormethylphenoxy)phenoxy)propionsäuremethylester (US-A 4,808,750),
   2-(4-(2,4-Dichlorbenzyl)phenoxy)propionsäuremethylester (DE-A 24 17 487), 4-(4-(4-Trifluormethylphenoxy)phenoxy)pent-2-en-säureethylester, 2-(4-(4-Trifluormethylphenoxy)phenoxy)propionsäuremethylester (DE-A 24 33 067);
A2) "Einkernige" Heteroaryloxyphenoxy-alkancarbonsäure-Derivate, z.B. 2-(4-(3,5-Dichlorpyridyl-2-oxy)phenoxy)propionsäureethylester (EP-A 0 002 925), 2-(4-(3,5-Dichlorpyridyl-2-oxy)phenoxy)propionsäurepropargylester (EP-A 0 003 114),
   2-(4-(3-Chlor-5-trifluormethyl-2-pyridyloxy)phenoxy)propionsäure-methylester (EP-A 0 003 890),
   2-(4-(3-Chlor-5-trifluormethyl-2-pyridyloxy)phenoxy)propionsäureethylester (EP-A 0 003 890),
   2-(4-(5-Chlor-3-fluor-2-pyridyloxy)phenoxy)propionsäurepropargylester (EP-A 0 191 736),
   2-(4-(5-Trifluormethyl-2-pyridyloxy)phenoxy)propionsäurebutylester (Fluazifop-butyl);
A3) "Zweikernige" Heteroaryloxyphenoxy-alkancarbonsäure-Derivate, z.B. 2-(4-(6-Chlor-2-chinoxalyloxy)phenoxy)propionsäuremethylester und -ethylester (Quizalofopmethyl und Quizalofopethyl),
   2-(4-(6-Fluor-2-chinoxalyloxy)phenoxy)propionsäuremethylester (s. J. Pest. Sci. Vol. 10, 61 (1985)),
   2-(4-(6-Chlor-2-chinoxalyloxy)phenoxy)propionsäure-2-isopropylidenaminooxy-ethylester (Propaquizafop),
   2-(4-(6-Chlorbenzoxazol-2-yl-oxy)phenoxy)propionsäureethylester (Fenoxapropethyl) und dessen D(+) Isomer (Fenoxaprop-P-ethyl, EX) und 2-(4-(6-Chlorbenzthiazol-2-yloxy)phenoxy)propionsäureethylester (DE-A 26 40 730), 2-(4-(6-Chlorchinoxalyloxy)phenoxy)propionsäure-tetrahydro-2-furylmethylester (EP-A 0 323 727);
B) Chloracetanilide, z.B.
   N-Methoxymethyl-2,6-diethyl-chloracetanilid (Alachlor),
   N-(3-Methoxyprop-2-yl)-2-methyl-6-ethyl-chloracetanilid (Metolachlor),
   N-(3-Methyl-1,2,4-oxadiazol-5-yl-methyl)-chloressigsäure-2,6-dimethylanilid,
   N-(2,6-Dimethylphenyl)-N-(1-pyrazolylmethyl)-chloressigsäureamid (Metazachlor);
C) Thiocarbamate, z.B.
   S-Ethyl-N,N-dipropylthiocarbamat (EPTC),
   S-Ethyl-N,N-diisobutylthiocarbamat (Butylate);
D) Cyclohexandionoxime, z.B.
   3-(1-Allyloxyiminobutyl)-4-hydroxy-6,6-dimethyl-2-oxocyclohex-3-encarbonsäuremethylester, (Alloxydim),
   2-(1-Ethoxyiminobutyl)-5-(2-ethylthiopropyl)-3-hydroxy-cyclohex-2-en-1-on (Sethoxydim),
   2-(1-Ethoxyiminobutyl)-5-(2-phenylthiopropyl)-3-hydroxy-cyclohex-2-en-1-on (Cloproxydim),
   2-(1-(3-Chlorallyloxy)iminobutyl)-5-(2-ethylthiopropyl)-3-hydroxy-cyclohex-2-en-1-on, 2-(1-(3-Chlorallyloxy)iminopropyl)-5-(2-ethylthiopropyl)-3-hydroxy-cyclohex-2-en-1-on (Clethodim),
   2-(1-Ethoxyiminobutyl)-3-hydroxy-5-(thian-3-yl)-cyclohex-2-enon (Cycloxydim), 2-(1-Ethoxyiminopropyl)-5-(2,4,6-trimethylphenyl)-3-hydroxy-cyclohex-2-en-1-on (Tralkoxydim);
E) Benzoylcyclohexandione, z.B.
   2-(2-Chlor-4-methylsulfonylbenzoyl)-cyclohexan-1,3-dion (SC-0051, EP-A 0 137 963), 2-(2-Nitrobenzoyl)-4,4-dimethyl-cyclohexan-1,3-dion (EP-A 0 274 634), 2-(2-Nitro-4-methylsulfonylbenzoyl)-4,4-dimethylcyclohexan-1,3-dion (WO 91/13548, Mesotrione);
F) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos).
G) Alkylazine, z.B. wie beschrieben in WO-A 97/08156, WO-A-97/31904, DE-A-19826670, WO-A-98/15536, WO-A-8/15537, WO-A-98/15538, WO-A-98/15539 sowie auch DE-A-19828519, WO-A-98/34925, WO-A-98/42684, WO-A-99/18100, WO-A-99/19309, WO-A-99/37627 und WO-A-99/65882, vorzugsweise solche der Formel (G) 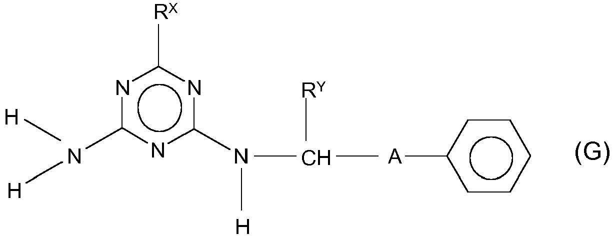 worin
   - R^{X}: (C₁-C₄)-Alkyl oder (C₁-C₄)-Haloalkyl,
   - R^{Y}: (C₁-C₄)-Alkyl, (C₃-C₆)-Cycloalkyl oder (C₃-C₆)-Cycloalkyl-(C₁-C₄)-Alkyl und
   - A: -CH₂-, -CH₂-CH₂-, -CH₂-CH₂-CH₂-, -O-, -CH₂-CH₂-O-, -CH₂-CH₂-CH₂-O-
   bedeuten, besonders bevorzugt solche der Formel G1-G7 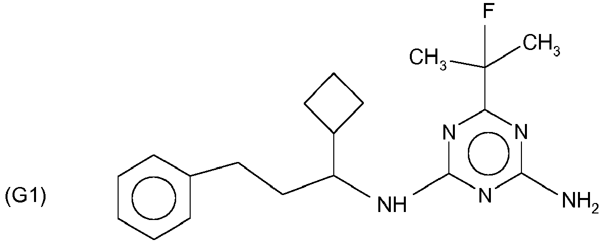 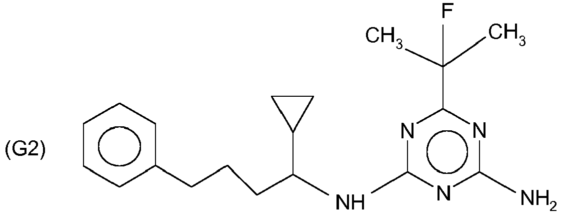 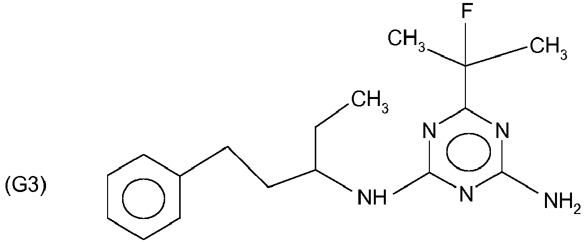 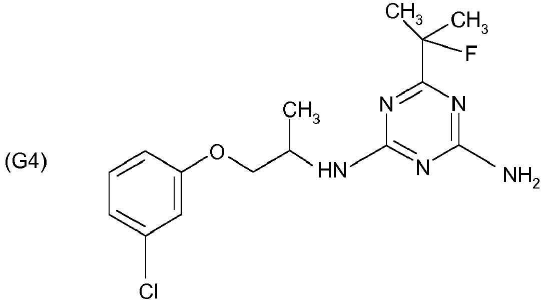 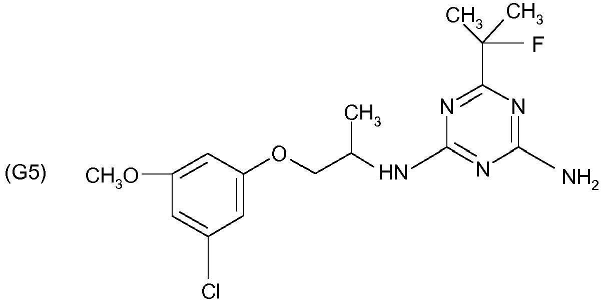 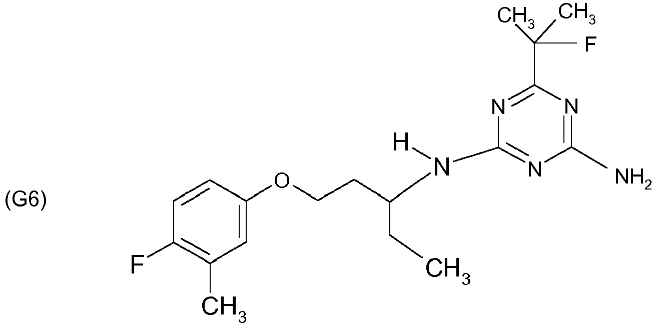 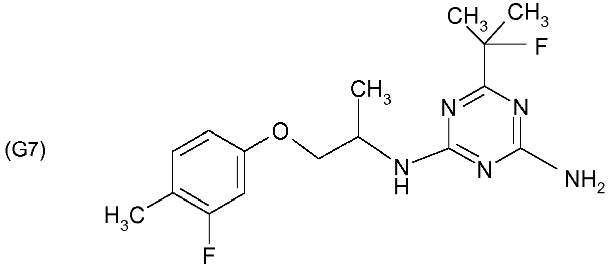
H) Phosphor-haltige Herbizide, z.B. vom Glusosinate-Typ wie Glufosinate im engeren Sinne, d. h. D,L-2-Amino-4-[hydroxy(methyl)phosphinyl]-butansäure, Glufosinate-monoammoniumsalz, L-Glufosinate, L- oder (2S)-2-Amino-4-[hydroxy(methyl)phosphinyl]-butansäure, L-Glufosinate-monoammoniumsalz oder Bialaphos (oder Bilanafos), d.h. L-2-Amino-4-[hydroxy(methyl)phosphinyl]-butanoyl-L-alanyl-L-alanin, insbesondere dessen Natriumsalz,
   oder vom Glyphosate-Typ wie Glyphosate, d. h. N-(Phosphonomethyl)-glycin, Glyphosate-monoisopropylammoniumsalz, Glyphosate-natriumsalz, oder Sulfosate, d. h. N-(Phosphonomethyl)-glycin-trimesiumsalz = N-(Phosphonomethyl)-glycin-trimethylsulfoxoniumsalz.

Die Herbizide der Gruppen A bis H sind beispielsweise aus den oben jeweils genannten Schriften und aus "The Pesticide Manual", 12. Auflage, 2000, The British Crop Protection Council, "Agricultural Chemicals Book II - Herbicides -", by W.T. Thompson, Thompson Publications, Fresno CA, USA 1990 und "Farm Chemicals Handbook'90", Meister Publishing Company, Willoughby OH, USA,1990, bekannt.

Als optional enthaltene von Komponente (a) verschiedene agrochemische Wirkstoffe d) kommen für die erfindungsgemäßen Festformulierungen beispielsweise die nachfolgend genannten bekannten Wirkstoffe in Frage, wie sie in z.B. Weed Research 26, 441-445 (1986), oder "The Pesticide Manual", 12th edition, The British Crop Protection Council, 2000, und dort zitierter Literatur beschrieben sind, z.B. in Mischungsformulierungen oder als Tank-Mischpartner. Die Verbindungen sind entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere: acetochlor; acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim; ametryn; amitrol; AMS, d.h. Ammoniumsulfamat; anilofos; asulam; atrazin; azafenidine (DPX-R6447), aziprotryn; barban; BAS 516 H, d.h. 5-Fluor-2-phenyl-4H-3,1-benzoxazin-4-on; benazolin; benfluralin; benfuresate; bensulide; bentazone; benzofluor; benzoylprop-ethyl; benzthiazuron; bialaphos; bifenox; bispyribac-natrium (KIH-2023), bromacil; bromobutide; bromofenoxim; bromoxynil, insbesondere bromoxynil-octanoat und bromoxynil-heptanoat; butachlor; butamifos; butenachlor; buthidazole; butralin; butroxydim (ICI-0500), butylate; cafenstrole (CH-900); carbetamide; cafentrazone; CDAA, d.h. 2-Chlor-N,N-di-2-propenylacetamid; CDEC, d.h. Diethyldithiocarbaminsäure-2-chlorallylester; chlomethoxyfen; chloramben; cloransulam-methyl (XDE-565), chlorazifop-butyl, chlorbromuron; chlorbufam; chlorfenac; chlorflurenol-methyl; chloridazon; chlornitrofen; chlorotoluron; chloroxuron; chlorpropham; chlorthal-dimethyl; chlorthiamid; cinidon-ethyl, cinmethylin; clethodim; clodinafop und dessen Esterderivate (z.B. clodinafoppropargyl); clomazone; clomeprop; cloproxydim; clopyralid; cumyluron (JC 940); cyanazine; cycloate; cycloxydim; cycluron; cyhalofop und dessen Esterderivate (z.B. Butylester, DEH-112); cyperquat; cyprazine; cyprazole; 2,4-D; 2,4-DB; dalapon; desmedipham; desmetryn; di-allate; dicamba; dichlobenil; dichlorprop; diclofop und dessen Ester wie diclofop-methyl; diclosulam (XDE-564), diethatyl; difenoxuron; difenzoquat; diflufenican; diflufenzopyr-natrium (SAN-835H), dimefuron; dimethachlor; dimethametryn; dimethenamid (SAN-582H); dimidazone, 5-(4,6-Dimethylpyrimidin-2-yl-carbamoylsulfamoyl)-1-(2-pyridyl)-pyrazol-4-carbonsäuremethylester (NC-330); triaziflam (IDH-1105), cinosulfon; dimethipin, dinitramine; dinoseb; dinoterb; diphenamid; dipropetryn; diquat; dithiopyr; diuron; DNOC; eglinazine-ethyl; EL 177, d.h. 5-Cyano-1-(1,1-dimethylethyl)-N-methyl-1H-pyrazole-4-carboxamid; endothal; indanofan (MK-243), EPTC; esprocarb; ethalfluralin; ethidimuron; ethiozin; ethofumesate; F5231, d.h. N-[2-Chlor-4-fluor-5-[4-(3-fluorpropyl)-4,5-dihydro-5-oxo-1 H-tetrazol-1-yl]-phenyl]-ethansulfonamid; ethoxyfen und dessen Ester (z.B. Ethylester, HN-252); etobenzanid (HW 52); 3-(4-Ethoxy-6-ethyl-1,3,5-triazin-2-yl)-1-(2,3-dihydro-1,1-dioxo-2-methylbenzo[b]thiophen-7-sulfonyl)harnstoff (EP-A 079 683);
3-(4-Ethyl-6-methoxy-1,3,5-triazin-2-yl)-1-(2,3-dihydro-1,1-dioxo-2-methylbenzo[b]thiophen-7-sulfonyl)harnstoff (EP-A 079 683);
fenoprop; clomazone, fenoxaprop und fenoxaprop-P sowie deren Ester, z.B. fenoxaprop-P-ethyl und fenoxaprop-ethyl; butroxydimfenuron; flamprop-methyl; flufenacet (BAY-FOE-5043), fluazifop und fluazifop-P und deren Ester, z.B. fluazifopbutyl und fluazifop-P-butyl, florasulam (DE-570); fluchloralin; flumetsulam; fluometuron; flumiclorac und dessen Ester (z.B. Pentylester, S-23031); flumioxazin (S-482); flumipropyn; flupoxam (KNW-739); fluorodifen; fluoroglycofen-ethyl; flupropacil (UBIC-4243); fluridone; flurochloridone; fluroxypyr; flurtamone; fluthiacetmethyl (KIH-9201), fomesafen; fosamine; furyloxyfen; glufosinate; glyphosate; halosafen; halosulfuron und dessen Ester (z.B. Methylester, NC-319); haloxyfop und dessen Ester; haloxyfop-P (= R-haloxyfop) und dessen Ester; hexazinone; imazamethabenz-methyl; imazamox (AC-299263), imazapyr; imazaquin und Salze wie das Ammoniumsalz; imazapic; imazethapyr; imazosulfuron; ioxynil; isocarbamid; isopropalin; isoproturon; isouron; isoxaben; isoxapyrifop; karbutilate; lactofen; lenacil; linuron; MCPA; MCPB; mecoprop; mefenacet; mefluidid; metamitron; metazachlor; methabenzthiazuron; metam; methazole; methoxyphenone; methyldymron; metobenzuron, Mesosulfuron-methyl, mesosulfuron-methyl (WO 95/10507); metobromuron; metolachlor; S-metolachlor, metosulam (XRD 511); metoxuron; metribuzin; maleic hydrazide; molinate; monalide; monocarbamide dihydrogensulfate; monolinuron; monuron;
MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; foramsulfuron (WO 95/01344); naproanilide; napropamide; naptalam; NC 310, d.h. 4-(2,4-dichlorbenzoyl)-1-methyl-5-benzyloxypyrazol; neburon; nipyraclophen; nitralin; nitrofen; nitrofluorfen; norflurazon; orbencarb; oryzalin; oxadiargyl (RP-020630); oxadiazon; oxaziclomefone (MY-100), oxyfluorfen; paraquat; pebulate; pendimethalin; pentoxazone (KPP-314), perfluidone; phenisopham; phenmedipham; picloram; pinoxaden; piperophos; pyributicarb; pirifenop-butyl; pretilachlor; procyazine; prodiamine; profluralin; proglinazine-ethyl; prometon; prometryn; propachlor; propanil; propaquizafop und dessen Ester; propazine; propham; propisochlor; propyzamide; prosulfalin; prosulfocarb; prynachlor; pyraflufen-ethyl (ET-751), chloridazon; pyrazoxyfen; pyribenzoxim, pyridate; pyriminobac-methyl (KIH-6127), pyrithiobac (KIH-2031); pyroxofop und dessen Ester (z.B. Propargylester); quinclorac; quinmerac; quizalofop, quizalofop und quizalofop-P und deren Esterderivate z.B. quizalofop-ethyl; quizalofop-P-tefuryl und -ethyl; S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluor-methyl)-phenoxy]-2-naphthalenyl]-oxy]-propansäure und - methylester; flazasulfuron (FMC-97285, F-6285); sulfazuron; glyphosate-trimesium (ICI-A0224); TCA; tebutam (GCP-5544); tebuthiuron; tepraloxydim (BAS-620H), terbacil; terbucarb; terbuchlor; terbumeton; terbuthylazine; terbutryn; TFH 450, d.h. N,N-Diethyl-3-[(2-ethyl-6-methylphenyl)-sulfonyl]-1 H-1,2,4-triazol-1-carboxamid; thenylchlor (NSK-850); thiazafluron; thiazopyr (Mon-13200); thidiazimin (SN-124085); thiobencarb; tiocarbazil; tralkoxydim; tri-allate; triazofenamide; triclopyr; tridiphane; trietazine; trifluralin; trimeturon; tsitodef; vernolate; WL 110547, d.h. 5-Phenoxy-1-[3-(trifluormethyl)-phenyl]-1 H-tetrazol; UBH-509; D-489; LS 82-556; KPP-300; KPP-421, MT-146, NC-324; butenachlor (KH-218); DPX-N8189; haloxyfopetotyl (DOWCO-535); DK-8910; flumioxazin (V-53482); PP-600; MBH-001, amicarbazone, aminopyralid, beflubutamid, benzobicyclon, benzofenap, benzfendizone, butafenacil, chlorfenprop, cloprop, daimuron, dichlorprop-P, dimepipeate, dimethenamid-P, fentrazamide, flamprop-M, fluazolate, indanofan, isoxachlortole, isoxaflutole, MCPA-thioethyl, mecoprop-P, mesotrione, metamifop, penoxsulam, pethoxamid, picolinafen, profluazol, profoxydim, pyraclonil, pyrazolynate, pyridafol, pyriftalid, sulcotrione, thidiazuron.

Soweit in den erfindungsgemäßen Festformulierungen agrochemische Wirkstoffe d) enthalten sind, beträgt deren Gewichtsanteil 1 bis 50 Gew.-%, insbesondere 5 bis 30 Gew.-%.

Der in den erfindungsgemäßen Festformulierungen enthaltene Gesamtwirkstoffgehalt (Summe der Komponenten a) + d)) liegt bevorzugt zwischen 26 und 97,9 Gew.-%, insbesondere zwischen 50 und 95 Gew.-%.

Als übliche Hilfs- und Zusatzstoffe (Komponente e)) können in den erfindungsgemäßen Festformulierungen z.B. noch enthalten sein: Verdickungs- und Thixotropiermittel, Anti-Drift-, Haft-, Penetrations-, Konservierungs- und Frostschutzmittel, Antioxidantien, Lösungsvermittler, Füll-, Träger- und Farbstoffe, Entschäumer, Verdunstungshemmer, sowie den pH-Wert und die Viskosität beeinflussende Mittel. Bevorzugte Hilfs- und Zusatzstoffe e) sind Haftmittel und Trägerstoffe.

Haftmittel können wasserlösliche oder wasserdispergierbare Stoffe sein, z.B. Polymere wie Homo- oder Copolymere vinylgruppenhaltiger Monomere. Beispiele sind Copolymere aus Vinylpyrrolidon und Dimethylaminoethylmethacrylat, aus Vinylchlorid und Vinylacetat, aus Propensulfonsäure und Polyvinylacetat, sowie teilverseiften Derivate hiervon, sowie gegebenenfalls teilverseifte Polyvinylacetate und Polyvinylpyrrolidone. Bevorzugt sind wasserlösliche Polymere wie teilverseifte Polyvinylacetate oder Polyvinylpyrrolidone, besonders bevorzugt sind Polyvinylpyrrolidon-Marken der Firmen BASF (z.B. Luviskol®-Typen wie Luviskol® K 17, Luviskol® K 30, Luviskol® K 60, Luviskol® K 80, Luviskol® K 90) oder International Specialty Products (z.B. Agrimer®-Typen wie Agrimer® 15, Agrimer® 30, Agrimer® 60, Agrimer® 90, Agrimer® XL, Agrimer® XLF, Agrimer® AT, Agrimer® ATF).

Trägerstoffe können z.B. wasserlösliche Stoffe sein, oder nicht wasserlösliche Stoffe, die aber so fein vermahlbar sind, dass sie unter entsprechenden Bedingungen eine wässrige Dispersion bilden können. Bevorzugte Trägerstoffe sind anorganische oder organische Trägerstoffe, z.B. natürliche und synthetische Silikate, Aluminiumhydroxid, Calcit, Bariumsulfat, sowie die Carbonate, Citrate, Oxide, Silikate, Stearate, Sulfate und Phosphate des Magnesiums und / oder des Calciums, polymere, oligomere und monomere Kohlenhydrate, z.B. Stärke oder Cellulose sowie deren synthetische Derivate, quervernetzte Acrylamid/Acrylsäure-Copolymere und deren Salze, quervernetzte Polyvinylpyrrolidone, sowie gegebenenfalls teilverseifte Polyvinylacetate. Bevorzugt sind monomere oder oligomere Kohlenhydrate, z.B. aus ein oder zwei Zuckereinheiten, besonders bevorzugt sind Disaccharide wie Maltose, Saccharose und Laktose.

Soweit in den erfindungsgemäßen Festformulierungen Hilfs- und Zusatzstoffe e) enthalten sind, beträgt der Gewichtsanteil 0,1 bis 50 Gew.-%, vorzugsweise 1 bis 25 Gew.-%.

Bevorzugt sind mit Propoxycarbazone und/oder dessen Salze a) hochbeladene erfindungsgemäße Festformulierungen, enthaltend:
a) 50 bis 95 Gew.-%, vorzugsweise 60 bis 80 Gew.-% Propoxycarbazone (A5.1) und/oder dessen Salze wie das Natriumsalz (A5.2),
b) 5 bis 30 Gew.-% eines oder mehrerer Tenside,
c) 2 bis 10 Gew.-%, vorzugsweise 2 bis 5 Gew.-% Wasser,
d) optional 1 bis 50 Gew.-%, vorzugsweise 5 bis 30 Gew.-% eines oder mehrerer von a) verschiedener agrochemischer Wirkstoffe,
e) optional 0,1 bis 25 Gew.-% von b) verschiedener üblicher Hilfs- und Zusatzstoffe, insbesondere Hilfsmittel und Trägerstoffe.

In einer besonders bevorzugten Ausführungsform enthält die erfindungsgemäße Festformulierung
a) 50 bis 95 Gew.-%, vorzugsweise 60 bis 80 Gew.-% Propoxycarbazone (A5.1) und /oder dessen Salze wie das Natriumsalz (A5.2),
b1) 5 bis 20 Gew.-% eines oder mehrerer Dispergatoren, insbesondere wasserlösliche polymere und anionische Dispergatoren wie Polyacrylate oder Ligninsulfonate,
b2) 0,1 bis 5 Gew.-% eines oder mehrerer Netzmittel, insbesondere monomere anionische Netzmittel, wie Mono- oder Dialkylnaphthalinsulfonsäure und deren Salze,
c) 2 bis 5 Gew.-% Wasser,
d) optional 1 bis 50 Gew.-% eines oder mehrerer von a) verschiedener Herbizide oder Safener,
e1) 0,1 bis 25 Gew.-% eines oder mehrerer Haftmittel, vorzugsweise wasserlösliche, polymere und nichtionische Haftmittel wie Polyvinylpyrrolidone,
e2) 0,1 bis 25 Gew.-% eines oder mehrerer Trägerstoffe, vorzugsweise monomere oder oligomere Kohlenhydrate wie Disaccaride.

Eine bevorzugte Ausführungsvariante besteht darin, dass die erfindungsgemäßen Festformulierungen Granulate sind, die wasserlöslich sind und durch Sprühtrocknung, insbesondere durch Versprühen im Wirbelbett, hergestellt werden. Die Granulate weisen eine Korngröße auf von d10 ≤ 250 µm, vorzugsweise ≤ 220 µm, d₅₀ ≤ 350 µm, vorzugsweise ≤ 310 µm, und d₉₀ ≤ 450 µm, vorzugsweise ≤ 420 µm.

Zur Anwendung können die erfindungsgemäßen Festformulierungen in fester Form appliziert werden oder gegebenenfalls in üblicher Weise, z.B. mittels Wasser in flüssige Formulierungen überführt werden wie Suspensionen, Emulsionen, Suspoemulsionen oder Lösungen. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche herbiziden Mittel, erhältlich aus den erfindungsgemäßen Festformulierungen, z.B. durch Lösen oder Dispergieren in Wasser. Alle genannten festen und flüssigen Formulierungen sind nachfolgend zusammen als herbizide Mittel bezeichnet.

Die erfindungsgemäßen herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei können die Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne daß durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern. Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den herbizide Mitteln verwendeten und wirksamen Dosierungen von herbiziden Verbindungen so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Mittel hinsichtlich der beschriebenen Eigenschaften deutlich übertroffen.

Obgleich die erfindungsgemäßen herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden Verbindungen eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der vorliegenden Erfindung ist weiterhin auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, wobei man ein oder mehrere erfindungsgemäße herbizide Mittel auf die Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

Die Festformulierung der vorliegenden Erfindung weist eine ausgezeichnete chemische Stabilität während der Herstellung und Lagerung auf. Außerdem weist die Festformulierung eine ausgezeichnete physikalische Stabilität, eine gute Applizierbarkeit und Anwenderfreundlichkeit, sowie eine hohe biologische Effektivität und Selektivität auf.

### Beispiele

### 1. Herstellung einer Festformulierung

Die Herstellung erfolgt, indem man die in den Tabellen 1 und 2 angegebenen Mengen der von Wasser verschiedenen Bestandteile in Wasser löst bzw. dispergiert. Die Bestandteile b1), b2), e1), e2) entsprechen dabei den in der Beschreibung als bevorzugt genannten Komponenten b1), b2), e1), e2). Die entstandene Mischung enthält 20 bis 80 Gew.-% Wasser. Um den Wassergehalt von mindestens 2 Gew.-% zu erreichen, wird dann bei gegebenen Verfahrens- und Anlageparametern durch Erstellung einer Trocknungskurve die benötigte Trocknungszeit in dem Fachmann geläufiger Weise bestimmt. Anschließend wird die Mischung mittels eines handelsüblichen Wirbelschichtgranulators bei der zuvor bestimmten Trocknungszeit in wasserlösliche Granulate überführt.

**Tabelle 1: Vergleichsbeispiel:**

| | | A |
|---|---|---|
| | | Gew.-% |
| a) | Propoxycarbazone Natrium | 71,43 |
| b1) | Dispergator | 14,63 |
| b2) | Netzmittel | 0,24 |
| c) | Wasser | 0,73 |
| e1) | Trägerstoff | 8,09 |
| e2) | Haftmittel | 4,88 |

**Tabelle 2: Erfindungsgemäße Beispiele:**

| | | B | C |
|---|---|---|---|
| | | Gew.-% | Gew.-% |
| a) | Propoxycarbazone Natrium | 71,43 | 71,43 |
| b1) | Dispergator | 14,61 | 14,30 |
| b2) | Netzmittel | 0,24 | 0,24 |
| c) | Wasser | 2,70 | 4,90 |
| e1) | Trägerstoff | 6,15 | 4,36 |
| e2) | Haftmittel | 4,87 | 4,77 |

### 2. Applikationstest

200 g der gemäß Beispiel 1 hergestellten Granulate werden zügig in 500 ml Wasser von 18°C Temperatur und 342 ppm Wasserhärte eingetragen, und es wird 10 Sekunden mit einem Holzstab umgerührt. Man lässt 50 Sekunden einwirken, rührt weitere 10 Sekunden, und gießt sofort über ein 300 µm-Sieb von 10 cm Durchmesser (Rückstand 1). Man lässt ablaufen, und spült ohne Druck mit 500 ml Wasser nach (Rückstand 2). Die verbliebenen Siebrückstände werden in Hinblick auf die Applizierbarkeit der betreffenden Granulate begutachtet. Die Ergebnisse sind in der nachfolgenden Tabelle 3 dargestellt.

**Tabelle 3:**

| | Rückstand 1 | Rückstand 2 |
|---|---|---|
| Vergleichsbeispiel (1A) | dicker breiartiger Belag | Belag löst sich nicht auf und bildet dicke Klumpen (innen nicht benetzt) |
| Erfindungsgemäßes Beispiel (1 B) | gleichmäßiger dünner Belag | Belag löst sich auf |
| Erfindungsgemäßes Beispiel (1 C) | gleichmäßiger dünner Belag | Belag löst sich auf |

Es ist ersichtlich, dass das Granulat mit geringem Wassergehalt (Vergleichsbeispiel, Tab. 1) zur Siebverstopfung und Klumpenbildung neigt, was applikationstechnisch nachteilig ist, insbesondere bei Verwendung von Einspülschleusen. Dagegen lassen sich die erfindungsgemäßen Granulate problemlos anwenden.

### 3. Entleerungstest

Eine COEX-Kunststoffflasche (Material: Polyethylen/Polyamid) wird mit den in Beispiel 1 (A, B und C) hergestellten Granulaten befüllt. Anschließend werden die Granulate zur Herstellung einer Anschlämmung in Wasser entleert. Beim Entleeren von dem in Beispiel 1A hergestellten Granulat (Vergleichsbeispiel) bleiben signifikante Mengen in der Kunststoffflasche zurück und es zeigt sich eine starke Staubentwicklung. Die Kunststoffflaschen mit den in den Beispielen 1 B und 1C hergestellten Granulaten (erfindungsgemäße Beispiele) lassen sich dagegen vollständig entleeren und es ist keine Staubentwicklung bemerkbar.

## Patentansprüche

1. Verfahren zur Bekämpfung von Schadpflanzen, worin eine wirksame Menge einer Festformulierung enthaltend
a) Propoxycarbazone und/oder dessen Salze,
b) eines oder mehrere Tenside und
c) mindestens 2 Gew.-% Wasser
auf die Schadpflanzen, Teile der Pflanzen, Pflanzensamen, die Fläche auf der Pflanzen wachsen appliziert wird.

2. Verwendung einer Festformulierung enthaltend
a) Propoxycarbazone und/oder dessen Salze,
b) eines oder mehrere Tenside und
c) mindestens 2 Gew.-% Wasser
zur Bekämpfung von Schadpflanzen.

3. Festformulierung bestehend aus wasserlöslichen Granulaten, enthaltend
a) Propoxycarbazone und/oder dessen Salze,
b) eines oder mehrere Tenside und
c) mindestens 2 Gew.-% Wasser
und wobei die Granulate eine Korngröße von d₁₀ ≤ 250µm, d₅₀ ≤ 350µm und d₉₀ ≤ 450µm aufweisen.

4. Festformulierung gemäß Anspruch 3, worin als Komponente a) Propoxycarbazone-Natrium enthalten ist.

5. Festformulierung gemäß Anspruch 3 oder 4, worin als Komponente b) enthalten sind, ein oder mehrere Tenside aus der Gruppe der Dispergatoren, Emulgatoren und Netzmittel.

6. Festformulierung gemäß einem oder mehreren der Ansprüche 3 bis 5, worin als Komponente c) 2 bis 10 Gew.-% Wasser enthalten sind.

7. Festformulierung gemäß einem oder mehreren der Ansprüche 3 bis 6, worin als Komponente d) enthalten sind, einer oder mehrere von a) verschiedene agrochemische Wirkstoffe.

8. Festformulierung gemäß einem oder mehreren der Ansprüche 3 bis 7, worin als Komponente e) enthalten sind, einer oder mehrere von b) verschiedene übliche Hilfs- und Zusatzstoffe, vorzugsweise aus der Gruppe der Haftmittel und Trägerstoffe.

9. Verwendung einer Festformulierung gemäß einem oder mehreren der Ansprüche 3 bis 8, zur Herstellung eines herbiziden Mittels.

10. Verwendung gemäß Anspruch 9, worin das herbizide Mittel eine Suspension, Emulsion, Suspoemulsion oder eine Lösung ist.

## Claims

1. A method of controlling harmful plants, wherein an effective amount of a solid formulation comprising
a) propoxycarbazone and/or its salts,
b) one or more surfactants, and
c) at least 2% by weight of water
is applied to the harmful plants, parts of the plants, plant seeds, the area on which the plants grow.

2. The use of a solid formulation comprising
a) propoxycarbazone and/or its salts,
b) one or more surfactants, and
c) at least 2% by weight of water
for controlling harmful plants.

3. A solid formulation consisting of water-soluble granules, comprising
a) propoxycarbazone and/or its salts,
b) one or more surfactants, and
c) at least 2% by weight of water
and wherein the granules have a particle size of d₁₀ ≤ 250 µm, d₅₀ ≤ 350 µm and d₉₀ ≤ 450 µm.

4. The solid formulation as claimed in claim 3, which comprises, as component a), propoxycarbazone-sodium.

5. The solid formulation as claimed in claim 3 or 4, which comprises, as component b), one or more surfactants from the group of the dispersants, emulsifiers and wetters.

6. The solid formulation as claimed in one or more of claims 3 to 5, which comprises, as component c), 2 to 10% by weight of water.

7. The solid formulation as claimed in one or more of claims 3 to 6, which comprises, as component d), one or more agrochemical active substances other than a).

8. The solid formulation as claimed in one or more of claims 3 to 7, which comprises, as component e), one or more customary adjuvants and additives other than b), preferably from the group of the tackifiers and carriers.

9. The use of a solid formulation as claimed in one or more of claims 3 to 8 for preparing a herbicidal composition.

10. The use as claimed in claim 9, wherein the herbicidal composition is a suspension, emulsion, suspoemulsion or a solution.

## Revendications

1. Procédé de lutte contre des plantes nocives, selon lequel une quantité efficace d'une formulation solide contenant :
a) de la propoxycarbazone et/ou ses sels,
b) un ou plusieurs tensioactifs et
c) au moins 2 % en poids d'eau,
est appliquée sur des plantes nocives, des parties des plantes, des graines des plantes, la surface sur laquelle les plantes poussent.

2. Utilisation d'une formulation solide contenant :
a) de la propoxycarbazone et/ou ses sels,
b) un ou plusieurs tensioactifs et
c) au moins 2 % en poids d'eau,
pour lutter contre des plantes nocives.

3. Formulation solide constituée par des granulats solubles dans l'eau, contenant :
a) de la propoxycarbazone et/ou ses sels,
b) un ou plusieurs tensioactifs et
c) au moins 2 % en poids d'eau,
les granulats présentant une taille de particule d₁₀ ≤ 250 µm, d₅₀ ≤ 350 µm et d₉₀ ≤ 450 µm.

4. Formulation solide selon la revendication 3, dans laquelle de la propoxycarbazone-sodium est contenue en tant que composant a).

5. Formulation solide selon la revendication 3 ou 4, dans laquelle un ou plusieurs tensioactifs du groupe constitué par les dispersants, les émulsifiants et les agents mouillants sont contenus en tant que composant b).

6. Formulation solide selon une ou plusieurs des revendications 3 à 5, dans laquelle 2 à 10 % en poids d'eau sont contenus en tant que composant c).

7. Formulation solide selon une ou plusieurs des revendications 3 à 6, dans laquelle un ou plusieurs agents actifs agrochimiques différents de a) sont contenus en tant que composant d).

8. Formulation solide selon une ou plusieurs des revendications 3 à 7, dans laquelle un ou plusieurs adjuvants et additifs usuels différents de b) sont contenus en tant que composant e), de préférence du groupe des adhésifs et des véhicules.

9. Utilisation d'une formulation solide selon une ou plusieurs des revendications 3 à 8 pour la fabrication d'un agent herbicide.

10. Utilisation selon la revendication 9, dans laquelle l'agent herbicide est une suspension, une émulsion, une suspo-émulsion ou une solution.
